# EUROPÄISCHE PATENTANMELDUNG

(11) **EP 1 223 700 A1**
(43) Veröffentlichungstag der Anmeldung: **17.07.2002**
(21) Anmeldenummer: 01130024.1
(22) Anmeldetag: 18.12.2001
(51) Int. Cl.: H04L 1/00, H04L 27/26, H04L 5/02

(54) **MC-CDMA-Übertragungssystem und -Verfahren mit adaptiver Abbildung**

(30) Priorität: 10.01.2001 DE 10100952
(71) Anmelder: Deutsches Zentrum für Luft- und Raumfahrt e.V., 51147 Köln (DE)
(72) Erfinder: Kaiser, Stefan, Dr., 82205 Gilching (DE)
(74) Vertreter: von Kirschbaum, Albrecht, Dipl.-Ing.

(57) **Zusammenfassung**

Beim erfindungsgemäßen Verfahren zur gleichzeitigen Übertragung mehrerer Datenströme über eine Übertragungsstrecke wird sendeseitig nach Kanalcodierung und Daten-zu-Symbol-Wandlung (Symbolmapping) jeder der dann aus Datensymbolen bestehenden Datenströme mit einer unterschiedlichen Spreizcodesequenz multipliziert. Im Rahmen des Symbolmapping sind dabei in den verschiedenen Datenströmen sendeseitig unterschiedliche Symbolmapping-Verfahren adaptiv generierbar, d.h. Symbolmapping-Verfahren, die eine unterschiedliche Stufenzahl aufweisen, wie z.B. QPSK, 8-PSK, 16-QAM oder 64-QAM. Danach werden die mit jeweils einer eigenen Spreizcodesequenz multiplizierten Datenströme zu einer resultierenden Signalsequenz summiert, die dann moduliert und ausgesendet wird. Empfangsseitig werden die gespreizten Datensymbole aus der demodulierten empfangenen resultierenden Signalsequenz entspreizt und in einem nachfolgenden Detektor detektiert, wobei im Detektor eine entsprechende adaptive Symbol-zu-Daten-Rückwandlung (Symboldemapping) des jeweiligen Datenstroms vorgenommen wird. Das Verfahren nach der Erfindung kann z.B. bei CDMA-Mobilfunksystemen, bei digitalen Rundfunksystemen, bei einem LAN-System ohne Vielfachzugriff oder auch bei TDMA- und FDMA-Verfahren benutzt werden.

## Beschreibung

Die Erfindung betrifft ein Verfahren zur gleichzeitigen Übertragung mehrerer Datenströme über eine Übertragungsstrecke, wobei sendeseitig nach Kanalcodierung und Symbolmapping, d.h. einer Wandlung jeweils mehrerer Datenbits in ein komplexwertiges Datensymbol, jeder der dann aus komplexwertigen Datensymbolen bestehenden Datenströme mit einer unterschiedlichen Spreizcodesequenz multipliziert wird und danach die mit jeweils einer eigenen Spreizcodesequenz multiplizierten Datenströme additiv zu einer resultierenden Signalsequenz überlagert werden, die dann aufmoduliert und ausgesendet wird, und wobei empfangsseitig die empfangene resultierende Signalsequenz demoduliert wird und in einem nachfolgenden Detektor die gespreizten Datensymbole entspreizt und durch Symboldemapping, d.h. mittels einer Rückwandlung der komplexwertigen Datensymbole in Datenbits, detektiert werden.

Heutige digitale Rundfunkstandards wie DAB (Digital Audio Broadcasting), beschrieben z.B. in "Radio Broadcast; digital audio broadcasting [DAB] to mobile, portable and fixed receivers", No. ETS 300 401, (Sophia Antipols), 1994, oder DVB-T (Terrestrial Digital Video Broadcasting), beschrieben z.B. in "Digital broadcasting systems for television, sound and data services; frame structure, channel coding and modulation for digital terrestrial broadcasting", No. ETS 300 744, (Sophia Antipols), 1994, aber auch drahtlose LAN(Local Area Network)-Systeme, wie beispielsweise HIPERLAN, das im Aufsatz von R. van Nee, G. Awater, M. Morrikura, H. Takanashi, M. Webster und K.W. Halford: "New high-rate wireless LAN standards" in IEEE Communications Magazine, Seiten 82 bis 88, Dezember 1999 beschrieben ist, beruhen auf der klassischen Verwendung von Kanalcodierung mit nachfolgender Daten-zu-Symbol-Wandlung (Symbolmapping), z.B. QPSK, und Modulation der Datensymbole.

Um die Datenrate an die Übertragungsqualität anzupassen, wird bei DAB eine Änderung der Datenrate ausschließlich durch Ändern der Kanalcoderate ermöglicht. Bei DVB-T und HIPERLAN wird eine begrenzte Anpassung der Datenrate durch die Kombination unterschiedlicher Kanalcoderaten und Symbolmapping-Verfahren ermöglicht. Bei allen diesen drei bekannten Standards wird aber die im Übertragungskanal zur Verfügung stehende Diversität nicht in optimaler Weise genutzt. Standards wie DAB, DVB-T und HIPERLAN nutzen also die durch den Mobilfunkkanal mit Mehrwegeausbreitung zur Verfügung stehende Zeit- und Frequenzdiversität nicht in optimaler Weise.

Beim Mobilfunkstandard der zweiten Generation GSM (Global System for Mobile Communications) wird ebenfalls die klassische Kombination von Kanalcodierung, Symbolmapping und Modulation verwendet, wobei die Signale der einzelnen Teilnehmer durch das Zeitmultiplex-Verfahren TDMA (Time Division Multiple Access) getrennt werden. Hier ist keine flexible Datenratenanpassung an die Übertragungsqualität möglich.

Auch bei den diesbezüglichen Erweiterungen GPRS (General Packet Radio Service), EDGE (Enhanced Data for GSM Evolution) und HSCSD (High Speed Circuit Switched Data) ist eine derartige Datenratenanpassung nur bedingt möglich, da dort die Datenrate durch Bündelung von Kanälen erhöht wird, was bei guten Übertragungsbedingungen aber keine Steigerung der spektralen Effizienz ermöglicht.

Beim Mobilfunkstandard der dritten Generation UMTS (Universal Mobile Telecommunication System) wird ebenfalls die klassische Verknüpfung von Kanalcodierung, Symbolmapping und Modulation verwendet, wobei die Signale der einzelnen Teilnehmer durch unterschiedliche Spreizcodesequenzen nach dem Codemultiplexverfahren CDMA (Code Division Multiple Access) getrennt werden. Eine bedingte Datenratenanpassung ist durch Ändern der Kanalcoderate möglich, wird allerdings auf Grund der Verwendung von QPSK-Symbolmapping nach oben stark begrenzt.

Die Mobilfunksysteme der zweiten und dritten Generation lassen demnach keinen bzw. nur einen stark begrenzten, an die Übertragungsqualität angepaßten Fehlerschutz bei der Übertragung der Daten zu. Dies bedeutet, daß nicht ohne weiteres die Datenrate eines Teilnehmers erhöht werden kann, wenn dieser eine gute Verbindung zur Basisstation hat. Die maximal mögliche spektrale Effizienz wird hierdurch nicht vollständig genutzt. Es ist zwar bedingt möglich, die Datenrate durch Ändern der Kanalcoderate zu variieren, jedoch ist diese z.B. bei UMTS durch die Verwendung von QPSK nach oben stark begrenzt.

Auf Grund der begrenzten Bandbreitenverfügbarkeit müssen Informationsübertragungssysteme hinsichtlich ihrer spektralen Effizienz optimiert werden. Es besteht nicht ausschließlich das Ziel, eine möglichst fehlerfreie Übertragung bei möglichst geringem Signal-/Störleistungsverhältnis zu erhalten, sondern auch möglichst viel Information über die begrenzt zur Verfügung stehende Übertragungsbandbreite zu übertragen. Hieraus ergibt sich das Problem, einen optimalen Kompromiß zwischen Datenrate, Bitfehlerrate und Signal-/Störleistungsverhältnis bei gegebener Bandbreite zu finden. Diese Problematik trifft sowohl für die drahtgebundene als auch für die drahtlose Übertragung zu. Wird darüber hinaus noch das Gebiet der Vielfachzugriffssysteme in Betracht gezogen, so kommt als weiteres Optimierungskriterium die Anzahl der zu versorgenden Teilnehmer hinzu.

In T.S. Rappaport: "Wireless Communications", Prentice Hall PTR, 1996, ISBN 0-13-375536-3, Seiten 238 bis 251 ist allgemein eine Reihe von linearen digitalen Modulationstechniken beschrieben, wobei allerdings nur ein einziger Datenstrom über eine Übertragungsstrecke zu übertragen und sendeseitig einem Modulations- bzw. empfangsseitig einem Demodulationsverfahren zu unterziehen ist. Eine Multiplikation der beim Symbolmapping erzeugten Symbole mit einem Spreizcode ist nicht vorgesehen. Eine Anpassung des Symbolmapping-Verfahrens und damit der jeweils anzuwendenden Modulation an die Kanalverhältnisse ist auch nicht vorhanden.

Aus EP 0 809 364 A2 ist ein Spread-Spectrum-Kommunikationssystem mit besonderem Zeitmultiplex bekannt, das Daten eines Datenstromes von mittlerer Datenrate einem Zeitmultiplexing zuführt und Daten eines Datenstromes von hoher Datenrate diesbezüglich unbehandelt läßt. Die Zeitmultiplex-Daten und die diesbezüglich unbehandelten Daten werden in biorthogonale Signale gewandelt, die dann einem Codemultiplexing (CDM) zugeführt werden. Die CDM-Signale werden dann mittels eines Spreizcodes bandgespreizt und anschließend in einem Trägermodulator einem Träger aufmoduliert.

Ein solches System kann zwar eine Übertragung von Datenströmen mit variablen oder unterschiedlichen Datenraten ohne komplizierte Zuordnung von Zeitschlitzen, Codes und Frequenzen ausführen. Eine Anpassung der Modulation an unterschiedliche Übertragungsbedingungen findet hier allerdings überhaupt nicht statt und es besteht keine Mehrträgermodulationsfähigkeit.

Aus WO 9917509 A1 ist ein besonderes Symbolmapping für codierte Modulationen, wie z.B. Mehrpegelcodierung oder Blockcodemodulation, in digitalen Kommunikationssystemen bekannt. Das Symbolmapping hat einen erheblichen Einfluß auf die Gesamtfehlerrate des Kommunikationssystems. Um verschiedene Fehlerschutzabstufungen für verschiedene Informationsklassen zu erhalten und gleichzeitig die Leistung der verschiedenen Klassen zu optimieren, wird bei diesem bekannten Verfahren mit codierter Informationsmodulation ein Datenbitstrom entsprechend einem vorher festgelegten Code codiert, wodurch ein Codesymbolstrom erzeugt wird, und jedes Codesymbol wird durch Symbolmapping zu einer Gruppierung von Modulationssymbolen neu umgestaltet, wodurch ein Modulationssymbolstrom erzeugt wird. Die Modulationssymbole sind in der Gruppierung zugeteilte Orte, die auf der Maximierung des Produkts quadrierter, von null abweichender Euklidischer Abstände zwischen Codesymbolen entlang Trellis-Pfaden beruhen.

Auch hier findet keine Anpassung an unterschiedliche Übertragungsbedingungen des Kommunikationssystems statt und es besteht keine Mehrträgermodulationsfähigkeit.

Aus US 5 602 833 A ist ein Verfahren zum Aufmodulieren von Daten in einem CDMA-Spread-Spectrum-Kommunikationssystem für Mehrfach-Zugriff bekannt, bei dem die Daten nach Umformung von Datensymbolen in digitale Kommunikationssignale übertragen werden. Es werden *N* orthogonale Funktionen der Länge *n* mit einer vorher festgelegten gegenseitigen rekursiven Beziehung erzeugt, wobei *N* eine Potenz von 2 ist. Dann werden *M* zueinander orthogonale Modulationssymbole mit der Länge *Ln* unter Verwendung *N* orthogonaler Funktionen und jeweiliger Inversen davon gebildet, wobei *M* gleich dem Produkt aus *L* und *N* ist und die Umgestaltung der Datensymbole in die vorher ausgewählten Modulationssymbole durch Symbolmapping entsprechend Binärwerten für jedes log *M*-Datensymbol erfolgt.

Ziel bei diesem bekannten Mehrfach-Zugriffsverfahren ist es, bei Verwendung einer nichtkohärenten Demodulationstechnik eine Erfassung und Demodulation eines Spread-Spectrum-Kommunikationssignal auf seiten eines Nutzers bei Vorhandensein einer abgeschwächten Signalenergie, z.B. Pilotsignalenergie, zu ermöglichen, die sogar so vermindert sein kann, daß sie praktisch nicht mehr detektierbar ist. Auch hier findet keine Anpassung der verschiedenen Datenströme an unterschiedliche Übertragungsbedingungen des Kommunikationssystems mit ungleichem Fehlerschutz der Teilnehmer statt und es besteht ebenfalls keine Mehrträgermodulationsfähigkeit.

Der Erfindung liegt die Aufgabe zu Grunde, ein flexibles Informationsübertragungsverfahren für digitale Datensignale zu schaffen, das es ermöglicht, den Fehlerschutz und die Datenrate flexibel an die Übertragungsbedingungen anzupassen, was insbesondere bei zeitvarianten Übertragungskanälen von großer Bedeutung ist. Darüber hinaus soll mit dem durch die Erfindung neu zu schaffenden Übertragungsverfahren die durch den Übertragungskanal zur Verfügung gestellte Frequenz- und Zeitdiversität noch effizienter genutzt werden können, als dies bereits in den bisher bekannten Übertragungssystemen der Fall ist. Außerdem soll Mehträgermodulationsfähigkeit bestehen.

Gemäß der Erfindung, die sich auf ein Verfahren der eingangs genannten Art bezieht, wird diese Aufgabe dadurch gelöst, daß sendeseitig in den verschiedenen Datenströmen im Rahmen des Symbolmappings adaptiv abhängig von den Übertragungsbedingungen unterschiedliche Symbolmapping-Verfahren generiert werden, die eine unterschiedliche Stufenzahl aufweisen, und daß empfangsseitig im Detektor ein entsprechendes adaptives Symboldemapping des jeweiligen Datenstroms vorgenommen wird.

Eine diesbezüglich vorteilhafte Option ist dadurch gekennzeichnet, daß sendeseitig Symbolmapping und empfangsseitig Symboldemapping für QPSK-, 8-PSK-, 16-QAM- oder 64-QAM-Modulation adaptiv vorgenommen werden.

Durch das Verfahren nach der Erfindung wird sowohl die Robustheit und damit die Effizienz als auch die Flexibilität von Informationsübertragungssystemen verbessert. Es läßt sich sowohl bei drahtlosen als auch bei drahtgebundenen Übertragungssystemen einsetzen. Das mit einem adaptiven Symbolmapping eingerichtete Verfahren nach der Erfindung kann unter anderem sowohl im Mobilfunk als auch im Rundfunk eingesetzt werden, wobei das Verfahren nach der Erfindung bei den verschiedenen Systemen auch unterschiedliche Vorteile aufweist.

Bei Verwendung des Verfahrens nach der Erfindung in einem CDMA(Code Division Multiple Access)-Vielfachzugriff-Mobilfunksystem, bei dem jedem Teilnehmer ein Datenstrom mit einer eigenen Spreizcodesequenz gemäß dem CDMA-Verfahren zugewiesen ist, wird in vorteilhafter Weise das für die einzelnen Datenströme jeweils verwendete Symbolmapping-Verfahren abhängig von der Qualität der Übertragungsbedingungen angepaßt, derart, daß einem gute Übertragungsbedingungen zu einem Teilnehmer aufweisenden Datenstrom sendeseitig ein höherstufiges Symbolmapping-Verfahren, z.B. 16-QAM oder 64-QAM, und einem ungünstige Übertragungsbedingungen zu einem Teilnehmer aufweisenden Datenstrom ein niederstufigeres Symbolmapping-Verfahren, z.B. QPSK, zugeteilt wird.

Wird das Verfahren nach der Erfindung dagegen in einem digitalen Rundfunksystem oder einem LAN(Local Area Network)-System ohne Vielfachzugriff oder auch bei einem Vielfachzugriff-Verfahren nach dem TDMA(Time Division Multiple Access)-oder FDMA(Frequency Division Multiple Access)-Verfahren verwendet, so werden in vorteilhafter Weise die seriellen Datenbits eines Datenstromes, die im Falle der Verwendung bei TDMA oder FDMA einem Teilnehmer zugeordnet sind, sendeseitig in entsprechend viele parallele Datenbits und damit auch in entsprechend viele Datenströme gewandelt, die dann einem adaptiven Symbolmapping unter Verwendung unterschiedlicher Symbolmapping-Verfahren unterzogen, jeweils mit einer anderen Spreizsequenz multipliziert und additiv zur resultierenden Signalsequenz überlagert werden, die dann moduliert und ausgesendet wird.

Empfangsseitig wird die empfangene resultierende Signalsequenz demoduliert, und in einem nachfolgenden Detektor werden die gespreizten Datensymbole entspreizt, einer entsprechenden adaptiven Symbol-zu-Daten-Rückwandlung (Symboldemapping) unterzogen und danach die gebildeten Datenbits parallel-seriell gewandelt und detektiert. Hierbei wird zweckmäßig für Datenströme, die eine hohe Robustheit gegen Fehler benötigen, ein Symbolmapping-Verfahren mit verhältnismäßig niedriger Stufenzahl, z.B. QPSK, und für Datenströme, bei denen eine höhere Fehlerrate toleriert wird, ein Symbolmapping-Verfahren mit höherer Stufenzahl, z.B. 64-QAM, verwendet.

Durch das Verfahren nach der Erfindung kann das benötigte Signal-/Störleistungsverhältnis, um eine bestimmte Bitfehlerwahrscheinlichkeit zu erreichen, merklich reduziert werden, was durch das zusätzliche Spreizen der Daten mit CDM (Code Division Multiplexing) erreicht wird. Durch Verwendung von CDM mit adaptivem sendeseitigen Symbolmapping und entsprechendem adaptiven empfangsseitigen Symboldemapping wird ferner die Flexibilität bezüglich unterschiedlicher Datenraten und Fehlerrobustheit erhöht, was bei den derzeit bekannten Übertragungssystemen nicht so flexibel möglich ist.

Eine vorteilhafte Weiterbildung des Verfahrens nach der Erfindung besteht darin, daß für die Spreizcodesequenzen ein orthogonaler Spreizungscode verwendet wird, der zweckmäßig ein Walsh-Hadamard-Code sein kann.

Zur Modulation kann beim Verfahren nach der Erfindung vorteilhaft ein Mehrträgermodulationsverfahren verwendet werden, wobei insbesondere OFDM (Orthogonal Frequency Division Multiplexing) in Betracht kommt. Das Mehrträgermodulationsverfahren sieht hierbei in zweckmäßiger Weise eine Mehrträgermodulation mit Schutzintervall vor, bestehend aus einer zyklischen Erweiterung des Mehrträgersymbols.

Zur Datendetektion kann beim Verfahren nach der Erfindung in vorteilhafter Weise empfangsseitig ein sogenanntes IC(Interference Cancellation)-Verfahren verwendet werden. Das häufig bei Mehrteilnehmersystemen benutzte IC-Verfahren kann darin beruhen, zunächst die Datensymbole desjenigen Teilnehmers, der den größten Beitrag zur Leistung des Empfangssignals leistet, zu ermitteln, anhand dieser detektierten Datensymbole den Beitrag des entsprechenden Teilnehmers am Empfangssignal zu ermitteln und diesen Beitrag vom Empfangssignal zu subtrahieren.

Durch sukzessives Anwenden dieser Vorgehensweise können somit auch die Datensymbole solcher Teilnehmer detektiert werden, die nur einen geringen Beitrag zur Leistung des Empfangssignal leisten. IC-Verfahren verwenden somit eine Rückkopplung. Eine günstige Voraussetzung zum Anwenden von IC-Verfahren besteht dann, wenn sich die Empfangsleistungen der verschiedenen Teilnehmer deutlich voneinander unterscheiden. Bei einem Rundfunksystem oder einem LAN-System, wie auch bei TDMA- und FDMA-Systemen werden die parallelen Datenströme mit gleicher Leistung empfangen, so daß hier ein paralleles IC-Verfahren vorteilhaft ist.

Das Verfahren nach der Erfindung wird nachfolgend anhand von Zeichnungen erläutert. Es zeigen:
- Fig.1: in Blockschaltbildform eine Schaltung zur sendeseitigen Spreizung und Überlagerung von Datensymbol-Sequenzen,
- Fig.2: in Blockschaltbildform eine sendeseitige CDM(Code Division Multiplexing)-Schaltung mit adaptivem Symbolmapping entsprechend dem Verfahren nach der Erfindung,
- Fig.3: in Blockschaltbildform einen empfangsseitigen Detektor mit adaptivem Symboldemapping entsprechend dem Verfahren nach der Erfindung,
- Fig.4: in Blockschaltbildform ein CDMA-Mobilfunksystem mit adaptivem sendeseitigen Symbolmapping und adaptivem empfangsseitigen Symboldemapping, und
- Fig.5: ebenfalls in Blockschaltbildform ein Rundfunksystem mit adaptivem sendeseitigen Symbolmapping und adaptivem empfangsseitigen Symboldemapping.

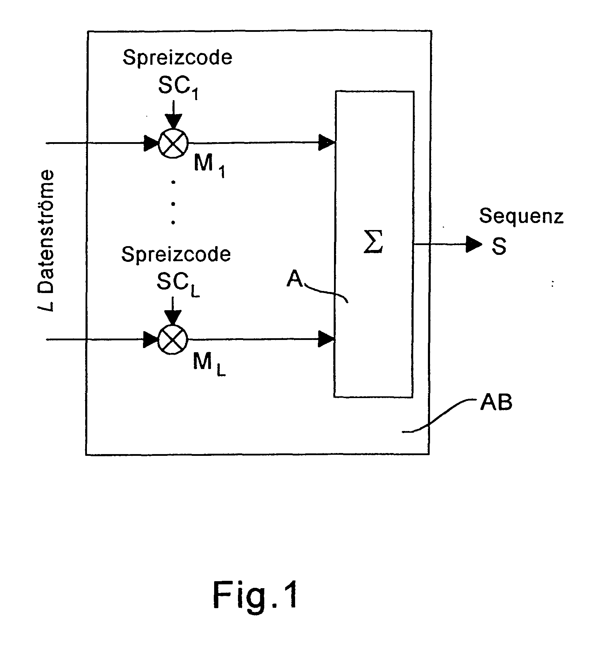

Beim Übertragungsverfahren nach der Erfindung wird davon ausgegangen, daß im Sender die zu übertragenden Datensymbole einem Codemultiplex-Prozeß unterzogen werden. Wie diesbezüglich Fig.1 zeigt, wird sendeseitig in einem Spreiz- und Überlagerungsblock AB eine Sequenz von *L* Datensymbolen, die *L* parallel vorliegenden Datenströmen zugeordnet sind, mit unterschiedlichen Spreizcodesequenzen SC₁ bis SC_{L} in Multiplizierern M₁ bis M_{L} multipliziert, bevor die *L* datensymbolmodulierten Spreizsequenzen in einem Summierer A additiv überlagert werden.

Es wird also von *L* unterschiedlichen Datenströmen ausgegangen, wobei jeder Datenstrom seinen eigenen Spreizcode hat. Die am Ausgang des Summierers A anstehende resultierende Signalsequenz S wird moduliert und gesendet.

Durch die Bandbreitenspreizung wird erreicht, daß die Energie eines Datensymbols über eine größere Übertragungsbandbreite gespreizt wird und es somit immer noch möglich ist, das Datensymbol im Empfänger richtig zu detektieren, auch wenn Teile der Signalenergie im Mehrwegekanal durch frequenz- und zeitselektive Signalschwunderscheinungen verloren gegangen sind.

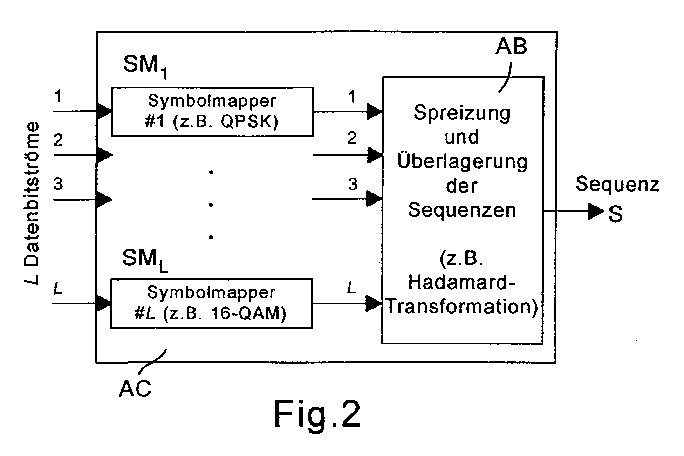

Wie Fig.2 in Blockschaltbildform zeigt, können beim Verfahren nach der Erfindung die *L* zugleich in einer Signalsequenz S zu übertragenden Datensymbole in Symbolmappern SM₁ bis SM_{L} mit unterschiedlichen Symbolmapping-Verfahren, z.B. QPSK, 8-PSK, 16-QAM oder 64-QAM, generiert werden, was eine unterschiedliche Robustheit, aber auch unterschiedliche Datenraten der einzelnen Datenströme ermöglicht. Das Verfahren nach der Erfindung läßt sich als adaptives CDM (Code Division Multiplexing) bezeichnen.

Wie Fig.2 zeigt, folgt im Anschluß an die adaptive Generierung der Datensymbole in den Symbolmappern SM₁ bis SM_{L} für die *L* verschiedenen Datensymbolströme wie in Fig.1 im Spreizund Überlagerungsblock AB eine Spreizung und Überlagerung der Sequenzen unter Verwendung z.B. einer Hadamard-Transformation. Dem Spreiz- und Überlagerungsblock AB und damit auch einem adaptiven CDM-Gesamtblock AC wird dann ausgangsseitig die resultierende Signalsequenz S zur Aussendung entnommen.

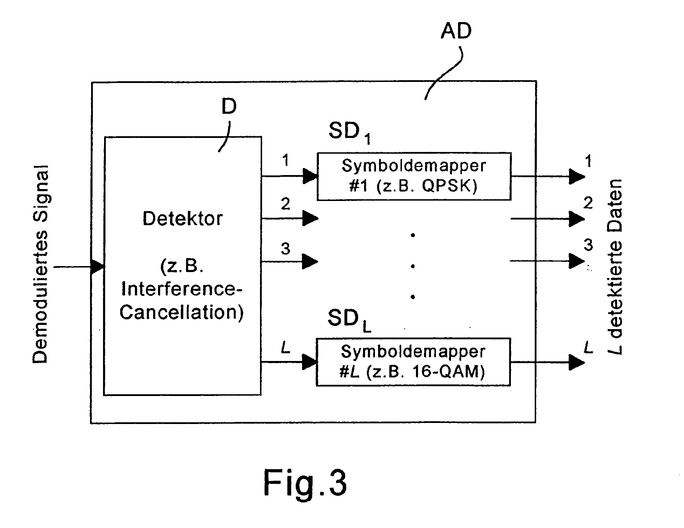

Empfängerseitig wird die nach Durchlaufen einer Übertragungsstrecke empfangene resultierende Signalsequenz zunächst demoduliert. In einem in Fig.3 dargestellten adaptiven Detektorblock AD, dem das demodulierte empfangene Signal zugeführt wird, werden die gespreizten Datensymbole entspreizt und detektiert. Dem eigentlichen Detektor D folgen an seinen *L* Datensymbolausgängen adaptive Symboldemapper SD₁ bis SD_{L}, die entsprechend den Symbolmappern SM₁ bis SM_{L} auf der Sendeseite (Fig.1) die unterschiedlichen Symbolmapping-Verfahren, z.B. QPSK, 8-PSK, 16-QAM oder 64-QAM, allerdings in umgekehrter Richtung generieren können. An den Ausgängen der *L* Symboldemapper SD₁ bis SD_{L} werden die *L* detektierten Datenströme abgenommen.

Der Detektor D verwendet in vorteilhafter Weise z.B. ein Verfahren nach dem Prinzip der Interference Cancellation (IC), um die Interferenz zwischen den überlagerten Datensymbolen zu minimieren. Hierfür eignet sich in besonderer Weise das im Aufsatz von S. Kaiser und J. Hagenauer: "Multi-carrier CDMA with iterative decoding and soft-interference cancellation" in Proc. IEEE Global Telecommunications Conference (GLOBE-COM'97), Phoenix, USA, Seiten 6 bis 10, November 1997 vorgestellte Interference Cancellation-Verfahren, da es nahezu die gesamte Interferenz im empfangenen Signal beseitigen kann.

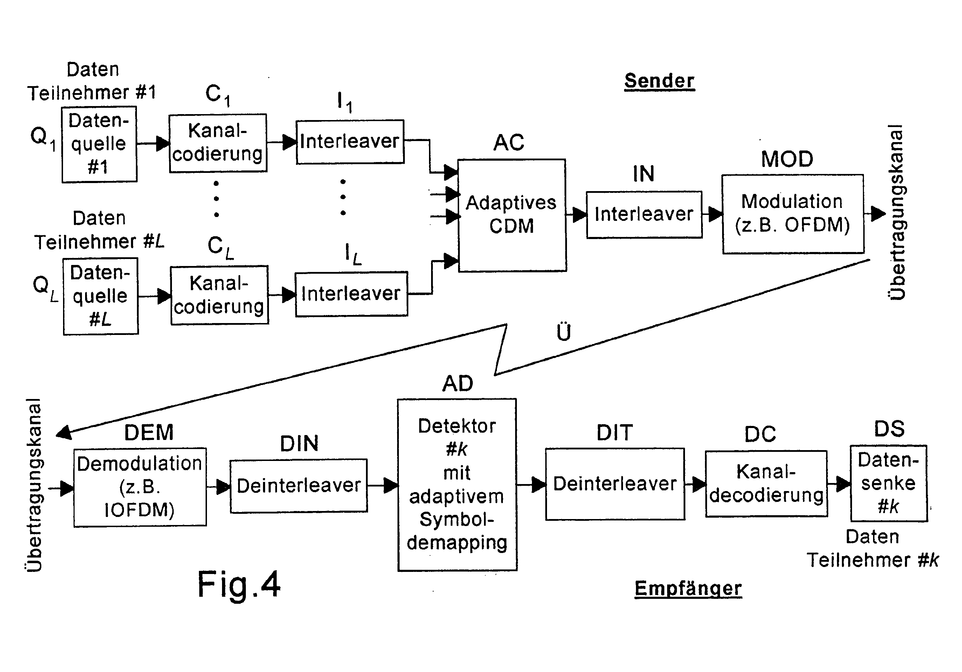

In Fig.4 ist in Blockschaltbildform ein CDMA-Mobilfunksystem mit adaptivem sendeseitigen Symbolmapping und adaptivem empfangsseitigen Symboldemapping zur Durchführung des Verfahrens nach der Erfindung dargestellt. Die *L* Datenströme von *L* Teilnehmern zugeordneten Datenquellen Q₁ bis Q_{L} werden Kanalcodierern C₁ bis C_{L} zugeführt, die z.B. als herkömmliche Faltungscodierer ausgelegt sein können. Die in den Kanalcodierern C₁ bis C_{L} gebildeten Datenbits werden jeweils mit Hilfe eines Interleavers I₁ bis I_{L} verwürfelt.

Die verwürfelten Datenströme werden dann einem adaptiven CDM-Gesamtblock AC eingegeben, der in seiner Struktur dem in Fig.2 abgebildeten adaptiven CDM-Gesamtblock AC entsprechen kann. Im Anschluß an den adaptiven CDM-Gesamtblock AC wird die daraus entnommene resultierende Signalsequenz nach Durchlaufen eines Interleavers IN einem Modulator MOD zugeführt, in welchem z.B. eine Mehrträgermodulation nach Art von OFDM durchgeführt wird. Das modulierte Signal wird dann auf eine Übertragungsstrecke Ü geschickt.

Bei CDMA-Mobilfunksystemen wird jedem Teilnehmer, im in Fig.4 dargestellten Beispiel also den *L* Teilnehmern, ein eigener Spreizcode gemäß dem CDMA-Verfahren zugewiesen. Sind für einen bestimmten der *L* Teilnehmer die Übertragungsbedingungen gut, so kann für ihn im adaptiven CDM-Gesamtblock AC ein höherstufiges Symbolmapping-Verfahren, z.B. 16-QAM oder 64-QAM, verwendet werden, während für einen Teilnehmer mit ungünstigen Übertragungsverhältnissen eher ein robustes Symbolmapping-Verfahren, z.B. QPSK, benutzt wird.

Der Teilnehmer mit höherstufigem Symbolmapping-Verfahren erreicht eine höhere Datenrate im Vergleich zum Teilnehmer mit einfachem Symbolmapping-Verfahren. Die Datenrate der einzelnen Teilnehmer läßt sich somit individuell an die Qualität der Übertragungsbedingungen anpassen.

Im Empfänger eines Teilnehmers *k* der *L* Teilnehmer wird das über die Übertragungsstrecke Ü übertragene und empfangene resultierende Signal zunächst in einem entsprechend der vorgesehenen Modulationsweise ausgelegten Demodulator DEM, also z.B. nach Art von IOFDM, demoduliert. Das demodulierte Signal wird über einen Deinterleaver DIN einem adaptiven Detektorblock AD zugeführt, der dem in Fig.3 abgebildeten adaptiven Detektorblock AD entsprechen kann.

Die einem adaptiven Symboldemapping unterzogenen und dem Teilnehmer auf Grund seines bekannten Spreizcodes zugeordneten Daten werden in einem Deinterleaver DIT entwürfelt und dann in einem Kanaldecodierer DC decodiert. Die decodierten Daten des Teilnehmers *k* können dann letztendlich in eine Datensenke DS eingespeist werden.

Das anhand der Fig.4 beschriebene Übertragungsverfahren ist somit für CDMA-Mobilfunksysteme geeignet und läßt sich als adaptives CDMA-Übertragungsverfahren bezeichnen.

Betrachtet man Rundfunksysteme oder LAN(Local Area Network)-Systeme ohne Vielfachzugriff bzw. Vielfachzugriffsverfahren nach dem TDMA- oder FDMA-Prinzip, so wird das vorher anhand der Fig.4 für ein CDMA-Mobilfunksystem beschriebene Verfahren nach der Erfindung auf die zu übertragenden Datensymbole (bei TDMA bzw. FDMA eines Teilnehmers) angewendet.

Es werden jeweils *L* serielle Datenbits (bei TDMA bzw. FDMA eines Teilnehmers) in *L* parallele Datenbits und damit in *L* Datenströme gewandelt, wobei jeder der dann *L* Datenströme mit einer anderen Spreizcodesequenz multipliziert, überlagert und wie vorstehend beschrieben weiter verarbeitet wird.

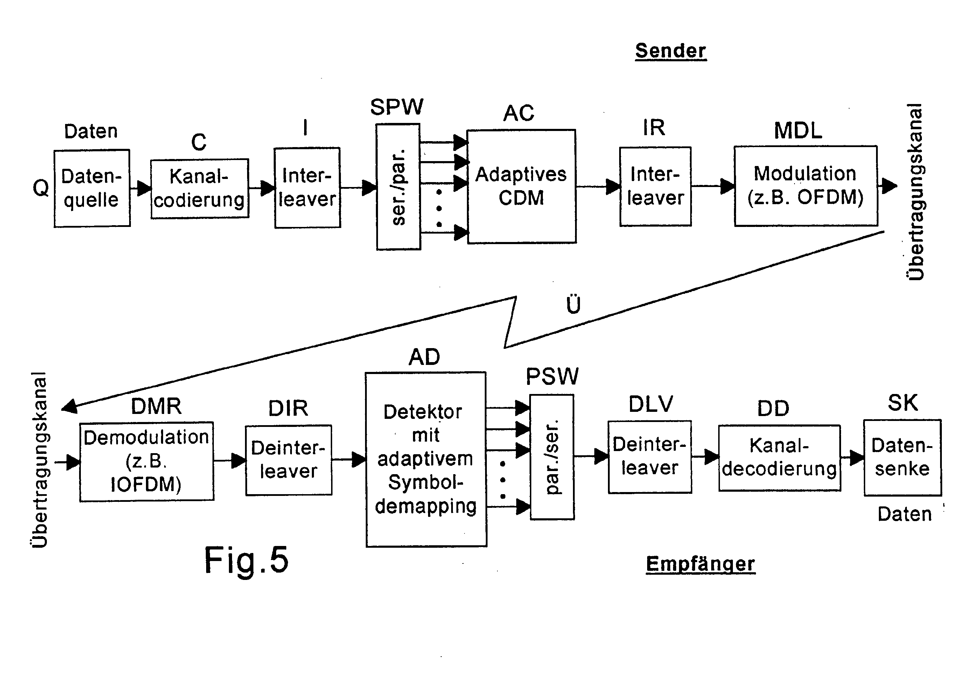

Eine mögliche Realisierung eines digitalen Rundfunksystems mit einem zugehörigen Sender und Empfänger ist in Blockschaltbildform in Fig.5 dargestellt. Hierbei werden die von einer Datenquelle Q kommenden Datenbits eines seriellen Datenstromes in einem Kanalcodierer C zunächst kanalcodiert.

Nach Durchführung eines Interleaving-Prozesses in einem Interleaver I erfolgt in einem Seriell/Parallel-Wandler SPW die Wandlung von jeweils *L* seriellen Datenbits in *L* parallele Datenbits, was dann *L* parallele Datenströme ergibt. Die *L* parallelen Datenbits werden dann einem adaptiven CDM-Gesamtblock AC zugeführt, der strukturmäßig so ausgebildet sein kann wie der in Fig.2 dargestellte adaptive CDM-Gesamtblock AC.

Im Anschluß an den adaptiven CDM-Gesamtblock AC wird die daraus entnommene resultierende Signalsequenz nach Durchlaufen eines Interleavers IR einem Modulator MDL zugeführt, in welchem z.B. eine Mehrträgermodulation nach Art von OFDM durchgeführt wird. Das modulierte Signal wird dann nach Verstärkung über eine Antenne auf eine Funk-Übertragungsstrecke Ü gesendet.

Im Empfänger des in Fig.5 dargestellten digitalen Rundfunksystems wird das über die Funk-Übertragungsstrecke Ü übertragene und empfangene resultierende Signal zunächst in einem entsprechend der vorgesehenen Modulationsweise ausgelegten Demodulator DMR, also z.B. nach Art von IOFDM, demoduliert. Das demodulierte Signal wird über einen Deinterleaver DIR einem adaptiven Detektorblock AD zugeführt, der hinsichtlich seiner Struktur dem in Fig.3 abgebildeten Detektorblock AD entsprechen kann.

Die einem adaptiven Symboldemapping unterzogenen und dem jeweils richtigen der *L* parallelen Datenwege auf Grund des bekannten Spreizcodes zugeordneten Datenbits werden in einem Parallel/Seriell-Wandler PSW in einen einzigen seriellen Datenstrom gewandelt, der in einem Deinterleaver DLV entwürfelt und dann in einem Kanaldecodierer DD kanaldecodiert wird. Die decodierten Daten können dann letztendlich in eine Datensenke SK eingespeist werden.

Im Gegensatz zum Vorteil der so bezeichneten CDMA-Mobilfunksysteme liegt der Vorteil bei Verteilersystemen, wie z.B. Rundfunk- und LAN-Systemen, neben einer flexiblen Datenratenanpassung in einer erhöhten Robustheit gegen Übertragungsfehler. Aufgrund der nochmaligen Spreizung der einzelnen Datensymbole vor der Übertragung erhöht sich der Diversitätsgewinn, und die Effizienz des Empfängers kann gesteigert werden.

Die flexible Datenratenanpassung mittels ungleichem Fehlerschutz durch adaptives CDM entsprechend der Erfindung bietet eine weitaus feinere Anpassung des Fehlerschutzes unterschiedlicher Datenströme, als sie z.B. beim DVB-T-Standard vorgesehen ist, der beim Symbolmapping nur zwei Fehlerschutzebenen besitzt.

Wie anhand eines realisierten und später noch im einzelnen beschriebenen Ausführungsbeispiels gezeigt werden kann, können ohne weiteres acht oder mehr Fehlerschutzebenen durch unterschiedliche Symbolmapping-Verfahren mit adaptivem CDM entsprechend der Erfindung unterstützt werden. So kann z.B. ein Datenstrom, der eine hohe Robustheit gegen Fehler benötigt, QPSK-Symbolmapping verwenden, wobei ein zweiter Datenstrom eine höhere Datenrate mit 64-QAM-Symbolmapping übertragen kann und dabei eine höhere Fehlerrate toleriert.

Eine zweckmäßige und geeignete Realisierung ergibt sich aus der Verwendung von orthogonalen Spreizungscodes, z.B. Walsh-Hadamard-Codes, um die Interferenz zwischen den Teilnehmern im Mobilfunkkanal zu minimieren.

Als geeignetes Modulationsverfahren läßt sich vorteilhaft eine Mehrträgermodulation, z.B. die im Aufsatz von S. Weinstein und P.M. Ebert: "Data transmission by frequency-division multiplexing using the discrete fourier transform" in IEEE Trans. Commun. Tech., Vol. VOM-19, Seiten 628 bis 634, Oktober 1971 beschriebene OFDM-Modulationsform, mit Schutzintervall verwenden, bestehend aus einer zyklischen Erweiterung des Mehrträgersymbols, da diese in geeigneter Weise Intersymbolinterferenzen im Mehrwegeausbreitungskanal eliminieren kann und eine hohe Bandbreiteneffizienz besitzt.

Diese Kombination von CDM mit orthogonalen Spreizcodes, adaptivem Symbolmapping pro Datenstrom und das Verwenden von OFDM ermöglicht eine hohe Flexibilität bei der Datenrate und beim Fehlerschutz bzw. bei der Robustheit. Darüber hinaus ermöglicht diese Kombination eine hohe Ausnutzung der durch den Übertragungskanal zur Verfügung stehenden Diversität auf Grund der CDM-Komponente, wobei die verwendeten orthogonalen Spreizungscodes die Interferenz zwischen den Datensymbolen im Mobilfunkkanal minimieren. Schließlich kann OFDM Intersymbolinterferenzen zwischen OFDM-Datensymbolen in geeigneter Weise verhindern und ermöglicht eine hohe Bandbreiteneffizienz durch sein nahezu ideales Spektrum.

Nachfolgend werden noch einmal konzentriert die besonderen Merkmale und Vorteile des Übertragungsverfahrens nach der Erfindung dargestellt.

Dieses neue Verfahren ermöglicht einen adaptiven, ungleichen Fehlerschutz durch adaptives Symbolmapping der unterschiedlichen Datenströme bei gleichzeitiger Spreizung aller Daten der einzelnen Datenströme über die gesamte Übertragungsbandbreite oder über Teile davon. Die Spreizung erhöht den Diversitätsgewinn im frequenz- und/oder zeitselektiven Schwundkanal, da jedes Datensymbol über die gesamte Übertragungsbandbreite bzw. über Teile davon gespreizt wird, und erhöht somit die Robustheit des gesamten jeweiligen Übertragungssystems. Diese Kombination von Flexibilität und Robustheit wird erst durch das durch die Erfindung geschaffene CDM-Verfahren mit adaptivem Symbolmapping möglich.

In CDMA-Vielfachzugriffsystemen können verschiedene Teilnehmer mit unterschiedlichen Datenraten im gleichen Frequenzband übertragen, wobei das gewählte Symbolmapping-Verfahren der einzelnen Teilnehmer an die jeweilige Übertragungsgüte angepaßt werden kann. Dies ermöglicht einen ungleichen Fehlerschutz der einzelnen Teilnehmer.

So kann beispielsweise ein Teilnehmer sicher mit geringer Datenrate übertragen, während ein anderer Teilnehmer mit höherer Datenrate, aber nicht ganz so sicher überträgt. Beide Teilnehmer senden im gleichen Frequenzband. Diese Flexibilität in der Datenrate pro Teilnehmer ist bei den bisher bekannt gewordenen Übertragungsverfahren nicht vorhanden.

Digitale Rundfunksysteme profitieren von der Robustheit, die durch die Spreizung aller Daten über die gesamte Übertragungsbandbreite oder über Teile davon durch CDM bedingt ist, und zugleich von einer höheren Flexibilität in der Datenrate durch adaptives Symbolmapping. Auch diese Möglichkeiten sind bei den bisher bekannten Übertragungsverfahren nicht gegeben.

Das Verfahren nach der Erfindung eignet sich speziell für die drahtlose Übertragung von Signalen, da es eine schnelle Adaption der Robustheit an die sich ändernden Übertragungsbedingungen ermöglicht, wobei es aber auch für drahtgebundene Übertragungssysteme einsetzbar ist. Diese Art von Fehlerschutz ist neu.

Durch die Kombinierbarkeit mit dem Mehrträgermodulationsverfahren OFDM lassen sich Intersymbolinterferenzen zwischen benachbarten OFDM-Symbolen durch Einfügen einer zyklischen Erweiterung des OFDM-Symbols erreichen. Hierdurch ist gerade bei Störungen, die durch Mehrwegeausbreitung hervorgerufen werden, eine einfache Datendetektion im Empfänger möglich. Da CDM mit adaptivem Symbolmapping neu ist, ist auch diese Kombination mit OFDM neu, genauso wie auch die folgenden Kombinationen neu sind.

Durch das Verwenden von orthogonalen Walsh-Hadamard-Codes als Spreizcode beim Verfahren nach der Erfindung wird die Interferenz zwischen den parallelen Datenströmen im Mehrwegekanal minimiert.

Die Kombination von mit adaptivem Symbolmapping arbeitendem CDM mit dem speziellen IC(Interference Cancellation)-Verfahren, das aus dem bereits erwähnten Aufsatz von S. Kaiser und J. Hagenauer bekannt ist, ermöglicht eine nahezu vollständige Beseitigung der Interferenz durch die anderen Datenströme und ermöglicht somit eine hohe spektrale Effizienz des jeweiligen Übertragungssystems.

Die erreichbare Flexibilität bei der Datenratenzuweisung und beim Fehlerschutz ist sowohl für Leitungsvermittlungsnetze als auch für Paketvermittlungsnetze von Bedeutung. CDM mit adaptivem Symbolmapping gemäß dem erfindungsgemäß arbeitenden Verfahren ist auch z.B. für Internetanwendungen interessant, um die zur Verfügung stehende Bandbreite effizient und flexibel nutzen zu können.

Das erfindungsgemäße CDM-Übertragungsverfahren mit adaptivem Symbolmapping ist für einen Einsatz auf dem Informations- und Kommunikationsarbeitsgebiet sehr attraktiv und kann dank seiner Vorteile und seiner einfachen Umsetzbarkeit in zukünftigen Telekommunikationsstandards Einzug halten.

Für das Verfahren nach der Erfindung werden nachfolgend noch zwei realisierte Ausführungsbeispiele beschrieben, von denen das erste ein Mehrträger-CDMA-Mobilfunksystem betrifft.

Bei diesem Ausführungsbeispiel, das sich grundsätzlich an das in Fig.4 als Blockschaltbild dargestellte Mobilfunksystem mit adaptivem CDMA anlehnt, handelt es sich um eine OFDM-Übertragung mit 512 Unterträgern, realisiert mit einer IFFT/FFT der Größe 512, in einer Bandbreite von 2 MHz und bei einer Trägerfrequenz von 2 GHz. Das Schutzintervall zwischen benachbarten OFDM-Symbolen beträgt 5 µs. Die Coderate des als Kanalcode verwendeten Faltungscodes beträgt 2/3 und der Code hat eine Gedächtnistiefe von 6.

Nach dieser Kanalcodierung folgt ein Interleaver zum Verwürfeln der Codebits. Die Signale der verschiedenen Teilnehmer werden durch einen Spreizcode in Form orthogonaler Walsh-Hadamard-Codes der Länge 8 zuordenbar getrennt. Es werden Unterblöcke von je acht Teilnehmern verwendet, d.h. es können mit 64 parallelen Unterblöcken gleichzeitig maximal 512 Teilnehmer mit einer Datenrate von je 5,1 kbit/s unter der Voraussetzung übertragen, daß jeder Teilnehmer ein QPSK-Symbolmapping verwendet. Vor der Mehrträgermodulation mit OFDM und dem Einfügen des Schutzintervalls verwürfelt ein Interleaver die gespreizten Datensymbole.

Es wird in einer nachgebildeten Realisierung der Übertragungsstrecke ein Rayleigh-Schwundkanal als Übertragungskanal verwendet, der unter der Annahme von perfektem Interleaving durch unkorreliertes Rayleigh-Fading zwischen benachbarten Unterkanälen und benachbarten OFDM-Datensymbolen implementiert ist. Im Empfänger werden die Datensymbole mittels des im bereits erwähnten Aufsatz von S. Kaiser und J. Hagenauer beschriebenen IC(Interference Cancellation)-Verfahrens detektiert.

Um eine Bitfehlerrate von null zu erreichen, werden hierzu 5,7 dB beim Signal-/Störleistungsverhältnis benötigt. Verbessern sich die Empfangsbedingungen auf beispielsweise mehr als 8,5 dB, so können ein oder mehrere Teilnehmer auf 8-PSK wechseln und so immer noch die Anforderungen an die Bitfehlerrate einhalten, aber die Datenrate bei diesen Teilnehmern um 50% erhöhen.

Diese Steigerung der Datenrate verschlechtert die Übertragungsbedingungen der anderen Teilnehmer nicht. Bei sich weiter verbessernden Empfangsbedingungen läßt sich diese Steigerung durch Verwenden eines Symbolmapping von z.B. 16-QAM oder 64-QAM noch anheben. Eine derartige Flexibilität bei der Datenrate ist bei heutigen Mobilfunksystemen nicht vorhanden, da erst das erfindungsgemäße CDM-Verfahren mit adaptivem Symbolmapping und insbesondere noch vorzugsweise eine Kombination orthogonaler Spreizungscodes und OFDM-Mehrträgermodulation eine derart geeignete und vorteilhafte Realisierung möglich macht.

Wird als zweites Ausführungsbeispiel ein digitales Rundfunksystem betrachtet, dessen Parameter mit denen des vorstehend vorgestellten Mehrträger-CDMA-Mobilfunksystems übereinstimmen und das sich von letzterem nur dadurch unterscheidet, daß CDM nicht als Vielfachzugriffstechnik verwendet wird, sondern CDM mit adaptivem Symbolmapping zur Erhöhung der Robustheit des Systems eingesetzt wird, so liegt hier das benötigte Signal-/Störleistungsverhältnis um etwa 2 dB unter demjenigen eines vergleichbaren Rundfunksystems ohne CDM mit adaptivem Symbolmapping.

Die beiden vorstehend beschriebenen realisierten Ausführungsbeispiele zeigen die hohe Flexibilität und Robustheit, die das CDM-Übertragungsverfahren mit adaptivem Symbolmapping nach der Erfindung auszeichnet.

### Bezugszeichenliste

- A: Summierer
- AB: Spreiz- und Überlagerungsblock
- AC: Adaptiver CDM-Gesamtblock
- AD: Adaptiver Detektorblock
- C: Kanalcodierer
- C₁ bis C_{L}: Kanalcodierer
- D: Detektor
- DC: Kanaldecodierer
- DD: Kanaldecodierer
- DEM: Demodulator
- DIN: Deinterleaver
- DIR: Deinterleaver
- DIT: Deinterleaver
- DLV: Deinterleaver
- DMR: Demodulator
- DS: Datensenke
- I: Interleaver
- I₁ bis I_{L}: Interleaver
- IN: Interleaver
- IR: Interleaver
- M₁,...,M_{L}: Multiplizierer
- MOD: Modulator
- MDL: Modulator
- Q: Datenquelle
- Q₁ bis Q_{L}: Datenquellen
- PSW: Parallel/Seriell-Wandler
- S: Signalsequenz
- SC₁,..., SC_{L}: Spreizcodesequenz
- SD₁,..., SD_{L}: Symboldemapper
- SK: Datensenke
- SM₁,...,SM_{L}: Symbolmapper
- SPW: Seriell/Parallel-Wandler
- Ü: Übertragungsstrecke

## Patentansprüche

1. Verfahren zur gleichzeitigen Übertragung mehrerer Datenströme über eine Übertragungsstrecke, wobei sendeseitig nach Kanalcodierung und Symbolmapping, d.h. einer Wandlung jeweils mehrerer Datenbits in ein komplexwertiges Datensymbol, jeder der dann aus komplexwertigen Datensymbolen bestehenden Datenströme mit einer unterschiedlichen Spreizcodesequenz multipliziert wird und danach die mit jeweils einer eigenen Spreizcodesequenz multiplizierten Datenströme additiv zu einer resultierenden Signalsequenz überlagert werden, die dann aufmoduliert und ausgesendet wird, und wobei empfangsseitig die empfangene resultierende Signalsequenz demoduliert wird und in einem nachfolgenden Detektor die gespreizten Datensymbole entspreizt und durch Symboldemapping, d.h. mittels einer Rückwandlung der komplexwertigen Datensymbole in Datenbits, detektiert werden, **dadurch gekennzeichnet, daß** sendeseitig in den verschiedenen Datenströmen im Rahmen des Symbolmappings adaptiv abhängig von den Übertragungsbedingungen unterschiedliche Symbolmapping-Verfahren generiert werden, die eine unterschiedliche Stufenzahl aufweisen, und daß empfangsseitig im Detektor ein entsprechendes adaptives Symboldemapping des jeweiligen Datenstroms vorgenommen wird.

2. Verfahren nach Anspruch 1, **dadurch gekennzeichnet, daß** sendeseitig Symbolmapping und empfangsseitig Symboldemapping für QPSK-, 8-PSK-, 16-QAM- oder 64-QAM-Modulation adaptiv vorgenommen werden.

3. Verfahren nach Anspruch 1 oder 2, **dadurch gekennzeichnet, daß** bei Verwendung in einem CDMA(Code Division Multiple Access)-Vielfachzugriff-Mobilfunksystem, bei dem jedem Teilnehmer ein Datenstrom mit einer eigenen Spreizcodesequenz gemäß dem CDMA-Verfahren zugewiesen wird, das für die einzelnen Datenströme jeweils verwendete Symbolmapping-Verfahren abhängig von der Qualität der Übertragungsbedingungen angepaßt wird, derart, daß einem gute Übertragungsbedingungen zu einem Teilnehmer aufweisenden Datenstrom sendeseitig ein höherstufiges Symbolmapping-Verfahren und einem ungünstige Übertragungsbedingungen zu einem Teilnehmer aufweisenden Datenstrom ein niederstufigeres Symbolmapping-Verfahren zugeteilt wird.

4. Verfahren nach Anspruch 1 oder 2, **dadurch gekennzeichnet, daß** bei Verwendung in einem digitalen Rundfunksystem oder einem LAN(Local Area Network)-System ohne Vielfachzugriff oder auch bei Verwendung bei einem Vielfachzugriff-Verfahren nach dem TDMA(Time Division Multiple Access)- oder FDMA(Frequency Division Multiple Access)-Verfahren die seriellen Datenbits eines Datenstromes, die im Falle der Verwendung bei TDMA oder FDMA einem Teilnehmer zugeordnet sind, sendeseitig in entsprechend viele parallele Datenbits und damit auch in entsprechend viele Datenströme gewandelt werden, die einem adaptiven Symbolmapping unter Verwendung unterschiedlicher Symbolmapping-Verfahren unterzogen, jeweils mit einer anderen Spreizsequenz multipliziert und additiv zur resultierenden Signalsequenz überlagert werden, die dann aufmoduliert und ausgesendet wird, und daß empfangsseitig die empfangene resultierende Signalsequenz demoduliert wird und in einem nachfolgenden Detektor die gespreizten Datensymbole entspreizt, einem entsprechenden adaptiven Symboldemapping unterzogen und danach die gebildeten Datenbits parallel-seriell gewandelt und detektiert werden.

5. Verfahren nach Anspruch 4, **dadurch gekennzeichnet, daß** für Datenströme, die eine hohe Robustheit gegen Fehler benötigen, ein Symbolmapping-Verfahren mit verhältnismäßig niedriger Stufenzahl und für Datenströme, bei denen eine höhere Fehlerrate toleriert wird, ein Symbolmapping-Verfahren mit höherer Stufenzahl verwendet wird.

6. Verfahren nach einem der vohergehenden Ansprüche, **dadurch gekennzeichnet, daß** für die Spreizcodesequenzen ein orthogonaler Spreizungscode verwendet wird.

7. Verfahren nach Anspruch 6, **dadurch gekennzeichnet, daß** der orthogonale Spreizungscode ein Walsh-Hadamard-Code ist.

8. Verfahren nach einem der vohergehenden Ansprüche, **dadurch gekennzeichnet, daß** zur Modulation ein Mehrträgermodulationsverfahren verwendet wird.

9. Verfahren nach Anspruch 8, **gekennzeichnet durch** OFDM (Orthogonal Frequency Division Multiplexing) als Mehrträgermodulationsverfahren.

10. Verfahren nach Anspruch 8 oder 9, **dadurch gekennzeichnet, daß** das Mehrträgermodulationsverfahren eine Mehrträgermodulation mit Schutzintervall vorsieht, bestehend aus einer zyklischen Erweiterung des Mehrträgersymbols.

11. Verfahren nach einem der vorhergehenden Ansprüche, **dadurch gekennzeichnet, daß** zur Datendetektion empfangsseitig ein IC(Interference Cancellation)-Verfahren verwendet wird.

12. Verwendung des in Anspruch 3 angegebenen Verfahrens bei CDMA-Mobilfunknetzen.

13. Verwendung des in einem der Ansprüche 1 bis 11 angegebenen Verfahrens bei Leitungsvermittlungsnetzen.

14. Verwendung des in einem der Ansprüche 1 bis 11 angegebenen Verfahrens bei Paketvermittlungsnetzen.

15. Verwendung des in einem der Ansprüche 1 bis 11 angegebenen Verfahrens bei Internetanwendungen.
